Europäisches Patentamt

European Patent Office

Office européen des brevets

(11) Veröffentlichungsnummer: **0 111 113**
**B1**

# (12) EUROPÄISCHE PATENTSCHRIFT

(45) Veröffentlichungstag der Patentschrift:
24.06.87

(21) Anmeldenummer: 83110381.7

(22) Anmeldetag: **18.10.83**

(51) Int. Cl.⁴: **G 06 F 9/26**

(54) Vorrichtung zur Bereitstellung einer "Continue"-Adresse für einen mikroprogramm-gesteuerten Sequenzer und Verfahren zu seinem Betrieb.

(30) Priorität: 09.11.82 DE 3241396

(43) Veröffentlichungstag der Anmeldung:
20.06.84 Patentblatt 84/25

(45) Bekanntmachung des Hinweises auf die Patenterteilung:
24.06.87 Patentblatt 87/26

(84) Benannte Vertragsstaaten:
AT DE FR GB IT

(56) Entgegenhaltungen:
US - A - 3 736 567
US - A - 3 872 447

PATENTS ABSTRACTS OF JAPAN, Band 6, Nr.
34(P-104)(912), 2. März 1982
Le Nouvel Automatisme, Band 24, Januar/Februar 1979,
Seiten 31-39

(73) Patentinhaber: **Siemens Aktiengesellschaft Berlin und München, Wittelsbacherplatz 2, D-8000 München 2 (DE)**

(72) Erfinder: **Stadlmeier, Hans, Dipl.-Ing., Aichacher Strasse 2, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Bereitstellung einer «Continue»-Adresse für einen mikroprogrammgesteuerten Sequenzer und ein Verfahren zu ihrem Betrieb.

Beispielsweise besitzt ein integrierter Hochleistungs-DMA-Kontroller ADMA (advanced direct memory access) vier voneinander unabhängige Kanäle, die den Datentransfer zwischen Medien (Speicher, Peripherie-Geräte) oder allgemein gesprochen zwischen Datenquelle und Datensenke bewerkstelligen. Die Hauptsteuerung der Kanäle übernehmen Mikroprogramme. Die Folge der Mikrobefehle wird von einem Sequenzer gesteuert.

Der Sequenzer stellt bei erfüllter Testbedingung eine Verzweigungsadresse bereit, die aus dem gerade aktuellen Mikrobefehl selber oder aus anderen Einheiten (t.B. Mapper) stammen; anderenfalls liefert der Sequenzer eine «Continue»-Adresse, die üblicherweise die um 1 inkrementierte Mikroadresse des laufenden Mikrobefehls ist.

Diese Vorgehensweise wird gewählt bei Ausführung von sogenannten Organisations-Mikrobefehlen (ORG-Befehle) des ADMA. Diese Organisations-Mikrobefehle lesen Steuerparameter für den Datentransfer aus einem Organisationsspeicher, schreiben nach Beendigung des Datentransfers Parameter (z.B. Status) wieder in diesen Organisationsspeicher zurück und führen interne Verwaltungsaufgaben durch. Bei nichterfüllten Testbedingungen wird also stets der Folge-Mikrobefehl ausgeführt, welcher an einer Mikroadresse +1 bezogen auf den aktuellen Mikrobefehl in einem Organisationsspeicher ROM steht.

Beim ADMA besteht nun das Problem, dass unter bestimmten Umständen bei der eigentlichen Datenübertragung derselbe DMA-Befehl, der ein Nicht-Organisations-Mikrobefehl ist, zweimal hintereinander ausgeführt werden muss, um dann erst zu einem anderen Mikrobefehl zu verzweigen. Dies passiert beispielsweise, wenn zwecks Minimierung der Belegung des externen Busses zwei Bytes hintereinander von einer Datenquelle gelesen werden sollen, um dann ein Wort bestehend aus diesen zwei Bytes auf einmal zu einer Datensenke zu transferieren.

Es ist nun wünschenswert, diese mehrfach hintereinander auszuführenden Mikrobefehle nicht zweimal hintereinander mit unterschiedlichen Sprungbedingungen und Sprungadressen in den Mikrobefehlsspeicher ROM schreiben zu müssen. Ebenso wenig möchte man in einem Mikrobefehl zwei Sprungadressen mitführen, die je nach Testergebnis, nämlich ob die Testbedingungen erfüllt sind oder nicht, ausgewählt werden.

Aus der US-PS 3 736 567 ist es bekannt, einen Mikrobefehl mehrmals auszuführen, ohne ihn mehrmals im Mikrobefehlsspeicher abspeichern zu müssen und ohne ihn zu jeder Befehlsausführung einzeln aus dem Mikrobefehlsspeicher auslesen zu müssen. Dabei ist der mehrmals auszuführende Mikrobefehl, im Gegensatz zu sonstigen Mikrobefehlen, nicht im Mikrobefehlsspeicher enthalten, sondern in einem sonstigen, abzuarbeitenden Befehl, der in einem Schreib-Lese-Speicher gespeichert ist.

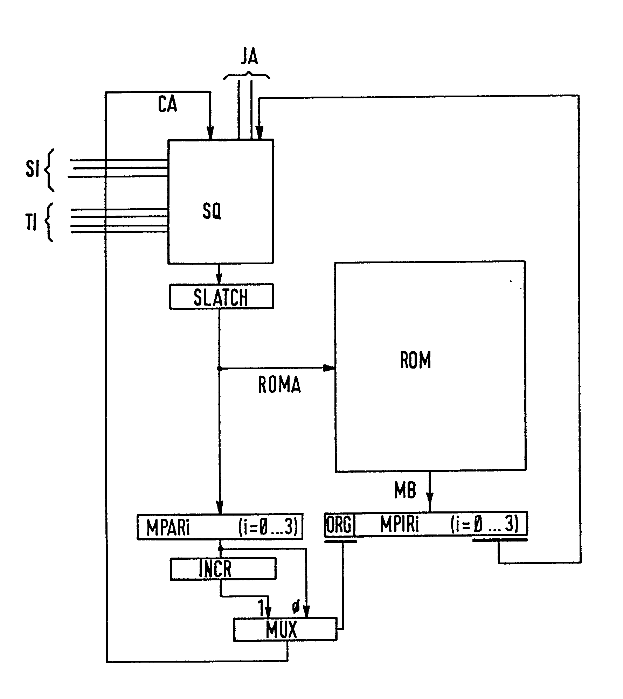

In der Zeitschrift «Le Nouvel AUTOMATISME»,. Ausgabe Jan.-Februar 1979, beschreibt auf den Seiten 31 bis 39 der Artikel «panorama des processeurs en tranches» Teil 1, «les séquenceurs» verschiedene Sequenzer. Insbesondere in Fig. 4 (in Verbindung mit Seite 33, linke Spalte, letzter Absatz bis Seite 34, erster Absatz) ist dabei eine Anordnung zur Adressenbehandlung für Mikroprogrammspeicher geoffenbart. Dieser Veröffentlichung ist jedoch keinerlei Hinweis auf einen Mikrobefehl zu entnehmen, der mehrmals ausgeführt werden soll. Sie zeigt jedoch einen Multiplexer mit 2 Adresseingängen und einem Steuereingang. Der Multiplexer gibt in Abhängigkeit von seinem Steuereingang an seinen Ausgang entweder eine an dem einen der beiden Adresseingänge anliegende Sprungadresse weiter oder eine an dem anderen der beiden Adresseingänge anliegende Zähladresse. Diese eingangsseitig anliegende Zähladresse ist grundsätzlich gegenüber ihrem Wert, den sie einen Zyklus früher aufwies, um den Wert «1» inkrementiert. Mit dieser Anordnung ist es also nicht möglich, einen Mikrobefehl mehrmals bei gleicher Adressierung hintereinander auszuführen.

Der vorliegenden Erfindung liegt die Aufgabe zugrunde, eine Vorrichtung der eingangs genannten Art und ein Verfahren zu ihrem Betrieb anzugeben, die die Verwendung eines möglichst kleinen Mikrobefehlsspeichers ROM und zudem eine möglichst kurze Lesezeit ermöglichen.

Diese Aufgabe wird erfindungsgemäss durch eine Vorrichtung nach dem Anspruch 1 und durch ein Verfahren nach dem Anspruch 2 gelöst. Ausgestaltungen und Vorteile der Erfindung sind in der Beschreibung und der Zeichnung dargestellt.

Die Erfindung ermöglicht die Verwendung eines möglichst kleinen Mikrobefehlsspeichers ROM und damit eine möglichst kurze Lesezeit dadurch, dass die Bildung der «Continue»-Adresse abhängig gemacht wird vom Typ des Mikrobefehls, der in einem Bit (ORG-Bit) im Mikrobefehl mitgeführt wird und auch für andere Zwecke benötigt wird.

Ein Ausführungsbeispiel der Erfindung ist in der Zeichnung dargestellt und wird im folgenden näher beschrieben.

Die Figur zeigt ein Blockschaltbild für ein Ausführungsbeispiel der Erfindung.

Die Bildung der «Continue»-Adresse CA ist abhängig vom Typ des Mikrobefehls MB, der in einem Bit ORG mitgeführt wird. Bei Organisations-Mikrobefehlen (ORG-Bit gesetzt) ist die «Continue»-Adresse CA die relativ zur Mikrobefehlsadresse ROMA des aktuellen Mirkobefehls MB um 1 inkrementierte Mikroadresse, welche von einem Inkrementer INCR geliefert wird.

Bei DMA-Mikrobefehlen oder allgemeiner gesprochen bei Nicht-Organisations-Mikrobefehlen (ORG-Bit nicht gesetzt im zugehörigen Mikrobefehl) ist die «Continue»-Adresse CA die unveränderte aktuelle Mikrobefehlsadresse ROMA, die in einem Mikrobefehls-Adressregister MPARi, i = 0, 1, 2, 3), enthalten ist. Jede Mikrobefehlsadresse ROMA, die zu einem aktuellen Mikrobefehl MB zuhörig ist, ist in einem Mikrobefehls-Adressregister MPARi enthalten, welches zu einem Mikroinstruktionsregister MPIRi, i = 0, 1, 2, 3, zugehörig ist. In diesem Mikroinstruktionsregister MPIRi ist der aktuelle Mikrobefehl MB enthalten.

Die Bereitstellung der «Continue»-Adresse CA wird in dem in der Figur dargestellten Ausführungsbeispiel der Erfindung eines Multiplexes MUX gesteuert. Dieser Multiplexer MUX legt entweder die von einer in der Figur nicht dargestellten zentralen Steuereinheit selektierte Mikroprogrammadresse ROMA aus einem selektierten Mikroprogramm-Adressregister MPARi oder den Ausgang des Inkrementers INCR an den «Continue»-Adresseingang des Sequenzers SQ.

Bei Mikrobefehlen, bei denen das ORG-Bit nicht gesetzt ist, ist die «Continue»-Adresse CA die unveränderte aktuelle Mikrobefehlsadresse ROMA. Bei Organisations-Mikrobefehlen, bei denen das ORG-Bit gesetzt ist, ist die «Continue»-Adresse CA die um 1 inkrementierte aktuelle Mikrobefehlsadresse ROMA.

Der Sequenzer SQ erhält zusätzlich zu der «Continue»-Adresse noch Testinformationen TI und Steuerinformationen SI über eine zentrale Steuereinheit, die ihrerseits von der Zentraleinheit (CPU) gesteuert wird, oder von einer Ausführungssteuerung innerhalb eines elektronischen Bausteines, zu dem die in der Figur dargestellte Vorrichtung gehört. Die von dem Sequenzer SQ bereitgestellte aktuelle Mikrobefehlsadresse ROMA wird in einem Zwischenspeicher SLATCH zwischengespeichert und trägt sodann dazu bei, dass aus dem Mikrobefehlsspeicher ROMA der zu dieser aktuellen Mikrobefehlsadresse ROMA gehörige Mikrobefehl MB ausgelesen wird.

**Patentansprüche**

1. Vorrichtung zur Bereitstellung einer «Continue»-Adresse (CA) für einen mikroprogrammgesteuerten Sequenzer (SQ) mit folgenden Merkmalen:

– ein Mikrobefehlsspeicher (ROM) enthält Mikrobefehle (MB), die durch Anlagen von Mikrobefehlsadressen (ROMA) an den Mikrobefehlsspeicher (ROM) adressierbar sind;
– jeder Mikrobefehl (MB) ist entweder vom Typ «Organisations-Mikrobefehl» oder vom Typ «Nicht-Organisations-Mikrobefehl»;
– der Typ eines jeden Mikrobefehls (MB) ist durch den Inhalt einer speziellen Speicherstelle (ORG-Bit) des jeweiligen Mikrobefehls (MB) festgelegt;
– ein aktueller, auszuführender Mikrobefehl (MB) ist in einem Mikroinstruktionsregister (MPIRi; i = 0, 1, 2, 3) enthalten, das eingangsmässig mit dem Ausgang des Mikrobefehlsspeichers (ROM) verbunden ist;

– die Mikrobefehlsadresse (ROMA), unter der der aktuelle, im Mikroinstruktionsregister (MPIRi) enthaltene Mikrobefehl (MB) innerhalb des Mikrobefehlsspeichers (ROM) adressierbar ist, ist in einem Mikrobefehls-Adressregister (MPARi; i = 0, 1, 2, 3) gespeichert;
– das Mikrobefehls-Adressregister (MPARi) ist eingangsmässig sowohl mit einem Adresseneingang des Mikrobefehlsspeichers (ROM) als auch mit einem Ausgang des Sequenzer (SQ) verbunden;
– dem Mikrobefehls-Adressregister (MPARi) ist ein Inkrementer (INCR) nachgeschaltet, an dessen Ausgang eine gegenüber der im Mikrobefehls-Adressregister (MPARi) gespeicherte Mikroadresse (ROMA) um den Zählwert «1» inkrementierte Mikrobefehlsadresse anliegt;
– ein Multiplexer (MUX) ist über einen ersten Eingang (1) mit dem Ausgang des Inkrementers (INCR), über einen zweiten Eingang (∅) mit dem Ausgang des Mikrobefehls-Adressregisters (MPARi) verbunden und ausserdem über einen Steuereingang mit einem Ausgang des Mikroinstruktionsregisters (MPIRi) verbunden, an dem der Inhalt der speziellen Speicherstelle (ORG-Bit) als Ausgangssignal anliegt;
– die «Continue»-Adresse (CA) liegt am Ausgang des Multiplexers (MUX) an;
– der Ausgang des Multiplexers (MUX) ist mit einem für die «Continue»-Adresse (CA) vorgesehenen Eingang des Sequenzers (SQ) verbunden.

2. Verfahren zum Betrieb einer Vorrichtung nach Anspruch 1, dadurch gekennzeichnet, dass mittels eines Multiplexers (MUX) bei Vorliegen eines ersten logischen Zustandes der speziellen Speicherstelle (ORG-Bit) des jeweiligen, im Mikroinstruktionsregister (MPIRi) enthaltenen Mikrobefehls (MB) die über den ersten Eingang (1) des Multiplexers (MUX) anliegende, um den Zählwert «1» inkrementierte Mikrobefehlsadresse als «Continue»-Adresse (CA) an den für die «Continue»-Adresse (CA) vorgesehenen Eingang des Sequenzers (SQ) gelegt wird und dass bei Vorliegen eines zum ersten logischen Zustand komplementären logischen Zustandes der speziellen Speicherstelle (ORG-Bit) des jeweiligen, im Mikroinstruktionsregister (MPIRi) enthaltenen Mikrobefehls (MB) die über den zweiten Eingang (∅) des Multiplexers (MUX) anliegende, im Mikrobefehls-Adressregister (MPARi) enthaltene Mikrobefehlsadresse (ROMA) als «Continue»-Adresse (CA) an den für die «Continue»-Adresse vorgesehenen Eingang des Sequenzers (SQ) gelegt wird.

**Claims**

1. A device for the preparation of a continue-address (CA) for a micro-programme-controlled sequencer (SQ) which has the following features:

– a micro-command store (ROM) contains micro-commands (MB) which can be addressed by applying micro-command addresses (ROMA) to the micro-command store (ROM);

– each micro-command (MB) is either of the organisation micro-command type or the non-organisation micro-command type;

– the type of each micro-command (MB) is determined by the contents of a special storage location (ORG-Bit) of the respective micro-command (MB);

– a current micro-command (MB) which is to be executed is contained in a micro-instruction register (MPIRi, i = 0, 1, 2, 3) which is connected at its input to the output of the micro-command store (ROM);

– the micro-command address (ROMA), under which the current micro-command (MB), contained in the micro-instruction register (MPIRi), can be addressed in the micro-command store (ROM) ist stored in a micro-command address register (MPARi; i = 0, 1, 2, 3);

– the micro-command address register (MPARi) is connected at its input both to the address input of the micro-command store (ROM) and to an output of the sequencer (SQ);

– the micro-command address register (MPARi) is connected at its output to an incrementer (INCR) to the output of which a micro-command address is applied which is incremented by the numerical value «1» in relation to the micro-address (ROMA) stored in the micro-command address register (MPARi);

– a multiplexer (MUX) is connected via a first input (1) to the output of the incrementer (INCR), is connected via a second input (∅) to the output of the micro-command address register (MPARi) and is also connected via a control input to an output of the micro-instruction register (MPIRi) at which the content of the special storage location (ORG-Bit) occurs as output signal;

– the continue-address (CA) occurs at the output of the multiplexer (MUX);

– the output of the multiplexer (MUX) is connected to an input of the sequencer (SQ) which is provided for the continue-address (CA).

2. A method of operating a device as claimed in claim 1, characterised in that, by means of a multiplexer (MUX), in the case of a first logic state of the special storage location (ORG-Bit) of the respective micro-command (MB) which is contained in the micro-instruction register (MPIRi), the micro-command address which is applied via the first input (1) of the multiplexer (MUX) and is incremented by the numerical value «1» is applied, as continue-address (CA), to that input of the sequencer (SQ) which is provided for the continue-address (CA),

and that in the case of a logic state of the special storage location (ORG-Bit) of the respective micro-command (MB) contained in the micro-instruction register (MPIRi), which is complementary to the first logic state thereof, the micro-command addresss (ROMA) which is applied via the second input (∅) of the multiplexer (MUX) and which is contained in the micro-command address register (MPIRi) is applied, as continue-address (CA), to that input of the sequencer (SQ) which is provided for the continue-address.

## Revendications

1. Dispositif pour préparer une adresse continue (CA) pour un séquenceur (SQ) microprogrammé présentant les caractéristiques suivantes:

– une mémoire de micro-instructions (ROM) contient des micro-instructions (MB), qui peuvent être adressées par application d'adresses de micro-instructions (ROMA) à la mémoire de micro-instructions (ROM);

– chaque micro-instruction (MB) est soit du type «micro-instructions d'organisation», soit du type «non micro-instructions d'organisation»;

– le type de chaque micro-instructions (MB) est déterminé par le contenu d'une position de mémoire particulière (bit ORG) de la micro-instruction (MB) respective;

– une micro-instruction actuelle (MB), devant être exécutée, est contenue dans un registre de micro-instructions (MPIRi); i = 0, 1, 2, 3), qui est reliée, côté entrée, à la sortie de la mémoire de micro-instructions (30);

– l'adresse de micro-instructions (ROMA), à laquelle l'actuelle micro-instruction (MB), contenue dans le registre de micro-instructions (MPIRi) peut êtreadressée à l'intérieur de la mémoire de micro-instructions (ROM), est mémorisée dans un registre d'adresses de micro-instructions (MPARi; i = 0, 1, 2, 3);

– le registre d'adresses de micro-instructions (MPARi) est relié, côté entreé, aussi bien à une entrée d'adresses de la mémoire de micro-instructions (ROM) qu'à une sortie du séquenceur (SQ);

– en aval du registre d'adresses de micro-instructions (MPARi) se trouve branché un incrémenteur (INCR), à la sortie duquel est présente une adresse de micro-instruction incrémentée de la valeur chiffrée «1» par rapport à l'adresse de micro-instruction (ROMA) mémorisée dans le registre d'adresses de micro-instructions (MPARi); et

– un multiplexeur (MUX) est relié par l'intermédiaire d'une première entrée (1) à la sortie de l'incrémenteur (INCR) et par l'intermédiaire d'une seconde entrée (∅) à la sortie du registre d'adresses de micro-instructions (MPARi) et est relié en outre par l'intermédiaire d'une entrée de commande à une sortie du registre de micro-instructions (MPIRi), dans laquelle est présent le contenu de la case de la position particulière de mémoire (bit ORG) en tant que signal de sortie);

– l'adresse «continue» (CA) est présente à la sortie du multiplexeur (MUX);

– la sortie du multiplexeur (MUX) est reliée à une entrée du séquenceur (SQ) prévue pour l'adresse «continue» (CA).

2. Procédé pour faire fonctionner un dispositif suivant la revendication 1, caractérisé par le fait qu'à l'aide d'un multiplexeur (MUX), lors de la présence d'un premier état logique de la position particulière de mémoire (bit ORG) de la micro-instruction respective (MB) contenue dans le registre de micro-instructions (MPIRi), l'adresse de micro-instruction, appliquée par l'intermédiaire de la première entrée (1) du multiplexeur (MUX) et incrémentée de la valeur chiffrée «1» est appliquée en tant qu'adresse «continue» (CA) à l'entrée du séquenceur (SQ), prévue pour l'adresse «continue» (CA), et que dans le cas de la présence d'un état logique, complémentaire du premier état logique, de la position particulière de mémoire (bit ORG) de la micro-instruction respective (MB) contenue dans le registre de micro-instructions (MPIRi), l'adresse de micro-instruction (ROMA), qui est appliquée par l'intermédiaire de la seconde entrée (∅) du multiplexeur (MUX) et qui est contenue dans le registre d'adresses de micro-instructions (MPARi) est appliquée en tant qu'adresse «continue» (CA) à l'entrée du séquenceur (SQ), prévue pour l'adresse «continue».